# EUROPÄISCHE PATENTSCHRIFT

(11) **EP 0 658 677 B1**
(45) Veröffentlichungstag und Bekanntmachung des Hinweises auf die Patenterteilung: **14.05.1997**
(21) Anmeldenummer: 94119636.2
(22) Anmeldetag: 13.12.1994
(51) Int. Cl.: E06B 5/16, E06B 1/38, E06B 3/54

(54) **Brandschutzverglasung**
Fire-resistant glazing
Vitrage pare-feu

(30) Priorität: 14.12.1993 EP 93120100
(43) Veröffentlichungstag der Anmeldung: 21.06.1995
(73) Patentinhaber: PROMAT GmbH, 40880 Ratingen (DE); FACHVERBAND GLASDACH-UND METALLBAU e.V., D-50670 Köln (DE)
(72) Erfinder: Hardebusch, Martin, D-59872 Meschede (DE); Kujas, Detlef, D-51107 Köln (DE); Wiedemann, Günter, Dr., D-40629 Düsseldorf (DE)
(74) Vertreter: Stenger, Watzke & Ring Patentanwälte

(56) Entgegenhaltungen:
- EP-A- 0 384 418
- DE-A- 3 508 078
- DE-A- 3 927 653
- DE-U- 9 101 452
- FR-A- 2 145 304
- FR-A- 2 267 427
- DEUTSCHE BAUZEITSCHRIFT - DBZ, Bd.39, Nr.10, Oktober 1991, GUTERSLOH DE Seiten 1426 - 1427, XP000258413 'CAR & DRIVER AUTOHAUS IN HAMBURG'

## Beschreibung

Die Erfindung betrifft eine Brandschutzverglasung zur Vermeidung des Durchtritts von Feuer und Rauch im Brandfall aus einem Raum in einen anderen unter Verwendung von Brandschutzscheiben mit einem darin enthaltenen, im Brandfall unter Kühlwirkung aufschäumenden und hierbei teilweise aus den Stirnflächen der Brandschutzscheiben austretenden Schutzwirkstoff, sowie mit einer die Brandschutzscheiben seitlich haltenden Stützkonstruktion, die selbst keine Schutzmaßnahmen gegen Feuer und Hitze aufweist.

Brandschutzverglasungen sind lichtdurchlässige Bauelemente, die dazu bestimmt sind, entsprechend ihrer Feuerwiderstandsdauer die Ausbreitung von Feuer und Rauch sowie ferner einen unzulässigen Übergang von Wärme zu verhindern. In DIN 4102, Teil 13, sind Brandschutzverglasungen der Feuerwiderstandsklasse F sowie der Feuerwiderstandsklasse G beschrieben und hinsichtlich ihrer Anforderungen erläutert.

Herkömmliche Brandschutzverglasungen verwenden eine aus Profilen zusammengesetzte Haltekonstruktion, die hinsichtlich ihrer Größe und ihrer brandschutztechnischen Eigenschaften auf die verwendeten Glasscheiben abgestimmt ist. Die in der Praxis verwendeten Brandschutzverglasungen verfügen über Haltekonstruktionen aus Stahlhohlprofilen, welche die einzelnen Brandschutzscheiben miteinander verbinden. Um im Brandfall eine Beschädigung der Stahlhohlprofile sowie ein Durchschlagen der Flammen im Bereich der Stoßfläche zu vermeiden, sind die Stahlhohlprofile beidseitig durch Streifen aus nichtbrennbarem bzw. schwer entflammbarem Material abgedeckt und geschützt. Neben dem hohen Erstellungsaufwand hat diese bekannte Brandschutzverglasung den Nachteil, daß die Streifen aus nichtbrennbarem bzw. schwer entflammbarem Material optisch wenig ansprechend aussehen, zumal sie im Vergleich zur Gesamtfläche der Brandschutzscheibe relativ breit ausfallen.

Eine weiterentwickelte Brandschutzverglasung ist aus der DE-U 91 01 452 bekannt. Diese Brandschutzverglasung verwendet unverkleidete Stahlhohlprofile und verzichtet auch sonst auf die bis dahin üblichen Brandschutzmaterialien. Gleichwohl läßt sich mit dieser Konstruktion der erforderliche Brandschutz erreichen, indem die Stoßflächen der einzelnen Brandschutzscheiben unter Bildung lediglich einer schmalen Fuge den Stoßflächen der benachbarten Brandschutzscheiben gegenüberliegen. Im Brandfall tritt der in den Brandschutzscheiben enthaltene Schutzwirkstoff aus diesen Stoßflächen aus und verschließt die Fuge feuer- und rauchdicht. Infolge dieses Effekts wird ferner eine stirnseitige Verbindung der einzelnen Brandschutzscheiben miteinander erreicht, so daß die im Brandfall eintretende Schwächung der Profile keinen entscheidenden Einfluß auf die Stabilität der Brandschutzverglasung als Ganzes hat.

Versuche haben allerdings gezeigt, daß sich diese Brandschutzverglasung im Brandfall sehr stark zum Brandherd hin wölbt. Ursache hierfür ist die starke Erhitzung und damit Ausdehnung der Profile auf der Seite des Brandherdes. Demgegenüber werden die Profile auf der dem Brandherd abgewandten Seite der Verglasung durch die dazwischen liegenden Brandschutzscheiben geschützt und damit wesentlich weniger erwärmt. Insgesamt kommt es daher zu thermischen Verspannungen der Brandschutzverglasung, was zwar auf den Brandschutz keinen Einfluß hat, jedoch wegen der eintretenden Wölbung auf einen mit den Dingen nicht vertrauten Betrachter bedenklich wirken muß. Hierbei ist zu berücksichtigen, daß sich derartige Brandschutzverglasungen in Situationen bewähren müssen, in denen anwesende Personen ohnehin leicht in Panik geraten können.

Der Erfindung liegt die **Aufgabe** zugrunde, eine einfach aufgebaute Brandschutzverglasung zu schaffen, die sich im Brandfall nicht oder nur wenig wölbt.

Zur **Lösung** dieser Aufgabe wir vorgeschlagen, daß sich die Stützkonstruktion aus mindestens einer vorzugsweise vertikal angeordneten Stütze zusammensetzt, die mit Abstand zu den Brandschutzscheiben freistehend im Raum angeordnet und hierbei mit ihren beiden Enden an den jeweiligen raumbegrenzenden Flächen befestigt ist, und die ausschließlich über Verbindungsarme mit den jeweils benachbarten Brandschutzscheiben verbunden ist und diese hält.

Gegenstand der Erfindung ist also eine Brandschutzverglasung, bei der sich die Stützkonstruktion außerhalb der Verglasungsebene freistehend im Raum befindet. Die Stütze ist daher im Brandfall einer allseitigen Hitzeeinwirkung ausgesetzt, so daß sie sich gleichmäßig und ohne seitliche Verspannungen ausdehnen kann. Damit vermindern sich dann aber auch die temperaturbedingten Spannungen in der Brandschutzverglasung, so daß diese auch bei länger andauernder Einwirkung von Feuer und Hitze keine stärkeren Wölbungen zeigt.

Bei der vorgeschlagenen Brandschutzverglasung ist die Stütze im Fall eines auf der Seite der Stütze wirkenden Brandherdes ohne jeden Schutz den Einwirkungen von Feuer und Hitze ausgesetzt. Dies führt naturgemäß zu einer Schwächung der Stütze. Diese Schwächung bewirkt jedoch keine kritische Schwächung der Brandschutzverglasung insgesamt, da der aus den Stirnflächen der Brandschutzscheiben austretende Schutzwirkstoff zu einem stirnseitigen Verkleben der einzelnen Scheiben führt, was in Verbindung mit der noch verbliebenen Restfestigkeit der Stütze eine ausreichende Stabilität der Konstruktion gewährleistet.

Bei der erfindungsgemäßen Brandschutzverglasung sind hitzebedingte Verspannungen generell dann ausgeschlossen, wenn sich der Brandherd auf der der Stütze abgewandten Seite befindet. Wirkt hingegen der Brandherd auf der Seite der Stütze, kann es zu einer unterschiedlichen Ausdehnung der Stütze einerseits und der Brandschutzscheibe andererseits kommen. Gemäß einer bevorzugten Ausgestaltung der Brandschutzverglasung sind daher Mittel vorgesehen, um thermisch bedingte Lageänderungen zwischen der Stütze einerseits und den Brandschutzscheiben andererseits auszugleichen. Hierzu wird vorgeschlagen, daß diese Ausgleichsmittel in einer axialen Verschiebbarkeit der Verbindungsarme entlang der Stütze bestehen.

In Ausgestaltung hierzu wird ein Blockierelement vorgeschlagen, welches die Ausgleichsmittel erst bei Hitzeeinwirkung freigibt. In einer ersten Variante wird hierzu ein Schmelzelement als Blockierelement oder zur Freigabe des Blockierelements vorgeschlagen. Gemäß einer zweiten Variante kann es auch von Vorteil sein, ein Sollbruchelement als Blockierelement oder zur Freigabe des Blockierelements zu verwenden.

In einer weiteren Ausgestaltung der Erfindung wird vorgeschlagen, daß die Stütze mit einem Längenausgleich versehen ist, vorzugsweise im Bereich ihrer oberen Befestigung. Auf diese Weise werden Verspannungen der am Boden einerseits und der Decke andererseits befestigten Stütze vermieden.

Weitere Einzelheiten und Vorteile des Gegenstandes der Erfindung werden nachfolgend anhand der Zeichnung erläutert. Darin zeigen:
- Fig. 1: in perspektivischer Gesamtansicht eine Brandschutzverglasung;
- Fig. 2: in einer perspektivischen Detailansicht Einzelheiten der Brandschutzverglasung nach Fig. 1;
- Fig. 3: in einer perspektivischen Detailansicht weitere Einzelheiten der Brandschutzverglasung nach Fig. 1;
- Fig. 4: einen verkürzten Schnitt durch eine Stützkonstruktion einer gegenüber den Figuren 2 und 3 geringfügig abgewandelten Brandschutzverglasung und
- Fig. 5: einen Schnitt entlang der Linie V-V in Fig. 4.

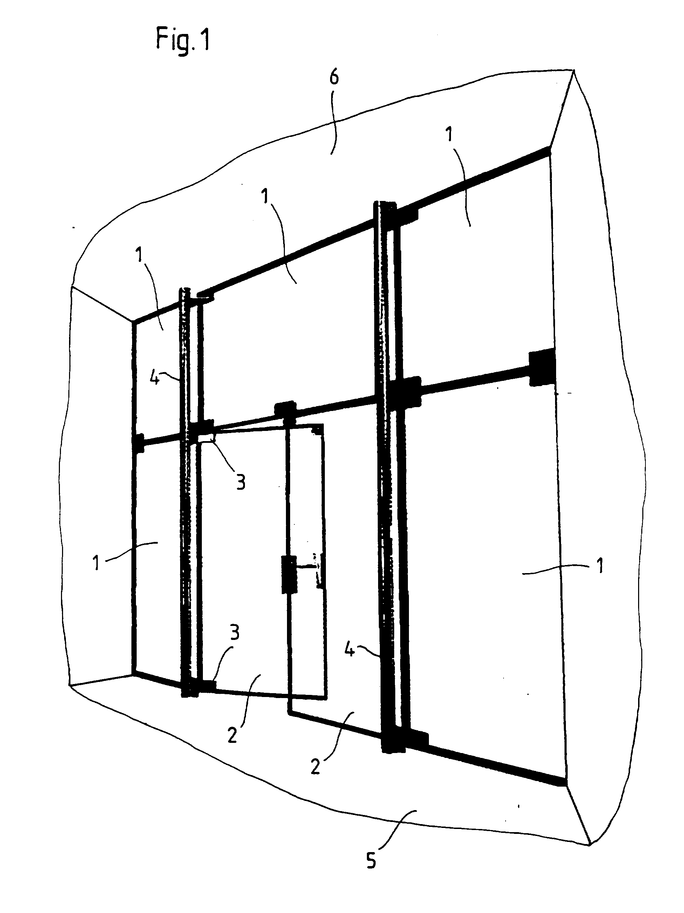

Die in Fig. 1 dargestellte Brandschutzverglasung dient der lichtdurchlässigen Unterteilung zweier aneinandergrenzender Räume und besteht aus insgesamt fünf feststehenden Brandschutzscheiben 1 sowie zwei beweglichen und als Türflügel ausgebildeten Brandschutzscheiben 2. Die beiden Brandschutzscheiben 2 bilden also eine doppelflügelige Tür und sind zu diesem Zweck oben und unten mittels Scharnieren 3 angelenkt.

Um die Brandschutzverglasung seitlich zu halten, verfügt diese über eine aus zwei vertikalen Stützen 4 bestehende Stützkonstruktion. Jede der Stützen 4 ist mit ihrem unteren Ende am Boden 5 und mit ihrem oberen Ende an der Decke 6 des betreffenden Raumes befestigt. Die Stütze 4 besteht aus einem durchgehenden Rundrohr aus Stahl und befindet sich, wie Fig. 1 gut erkennen läßt, nicht innerhalb der Ebene der Brandschutzverglasung, sondern mit einem Abstand von etwa 5 bis 10 cm vor der eigentlichen Brandschutzverglasung. Fig. 1 läßt außerdem erkennen, daß jede der Stützen 4 vor den vertikalen Stoßkanten aneinandergrenzender Brandschutzscheiben 1,2 angeordnet ist. Für einen in der Mitte vor der Brandschutzverglasung stehenden Betrachter sind daher die beiden Stützen 4 sichtbar, nicht jedoch die dahinter angeordneten senkrechten Stoßkanten. Zwischen den Stoßkanten befindet sich jeweils eine wenige Millimeter dicke Fuge, die mit einer geeigneten Dichtung oder Dichtmasse verschlossen ist. In die Dichtung kann auch ein Streifen aus einem unter Hitze aufschäumenden Material eingelegt sein.

Bei den Brandschutzscheiben 1,2 handelt es sich um ein Spezialverbundglas, welches aus mehreren Glasscheiben mit dazwischen angeordneten Brandschutzschichten besteht. Im Brandfall werden diese Brandschutzschichten aktiviert, wobei sie Wärmestrahlung absorbieren und so eine wirksame Dämmschicht bilden, welche den Durchgang von Feuer und Rauch verhindert. Dabei führt die Aktivierung der Brandschutzschichten im Brandfall dazu, daß diese aufschäumen und eine Trübung annehmen, so daß eine praktisch undurchsichtige Feuerschutzwand entsteht.

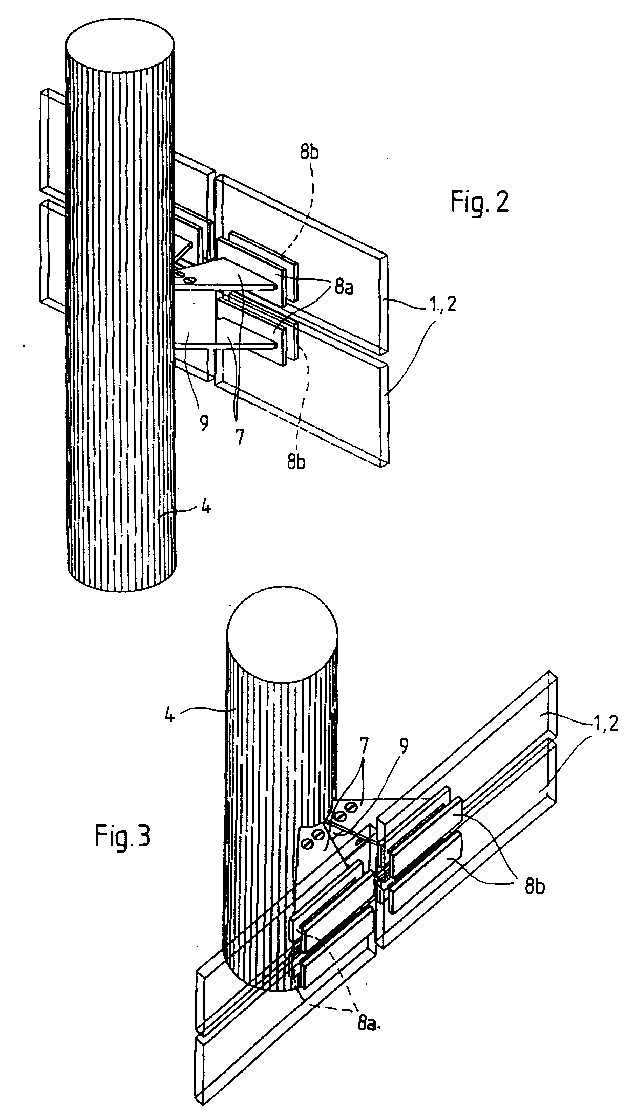

Einzelheiten der Verbindungen zwischen den Brandschutzscheiben 1,2 und der jeweiligen Stütze 4 werden nachfolgend anhand der Figuren 2 und 3 erläutert.

An der Stütze 4 sind über horizontale Verbindungsarme 7 senkrecht stehende Stützplatten 8a befestigt. Diese Stützplatten 8 sind über in den Figuren 2 und 3 nicht dargestellte Verschraubungen mit weiteren Stützplatten 8b verbunden, die sich auf der anderen Seite der in den Figuren 2 und 3 stark verkleinert dargestellten Brandschutzscheiben 1,2 befinden. Beide Stützplatten 8a,8b liegen mit ihren Flachseiten flächig im Bereich des Randes der jeweiligen Brandschutzscheibe 1,2 an und stützen diese seitlich ab. Auf diese Weise dient die Stütze mit den davon abzweigenden Verbindungsarmen 7 der seitlichen Halterung der nächstliegenden Brandschutzscheiben 1,2. Wesentlich ist hierbei die allseitig freistehende Bauweise der Stütze 4 mit einem durch die Verbindungsarme 7 gewahrten Abstand zu den Brandschutzscheiben 1,2.

Bei der Ausführungsvariante gemäß den Figuren 2 und 3 ist die Stütze 4 mit einem der Verglasung zugewandten Halteelement 9 versehen, mit dem die insgesamt vier Verbindungsarme 7 verschraubt sind. Anstelle dieser Verschraubung kann an gleicher Stelle auch ein Scharnier vorgesehen sein, um der beweglichen Brandschutzscheibe 2 das Aufschwenken zu ermöglichen.

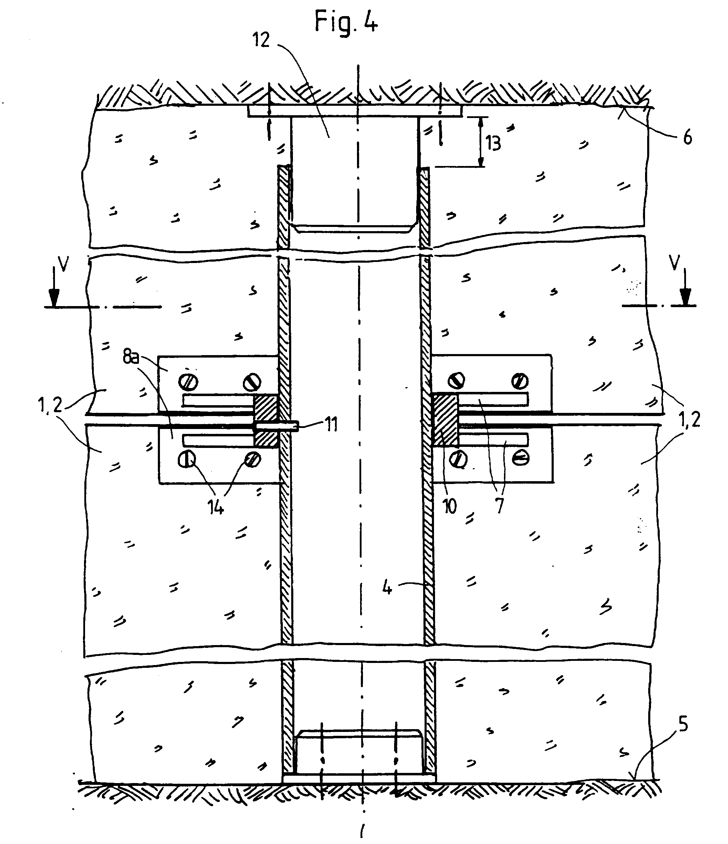

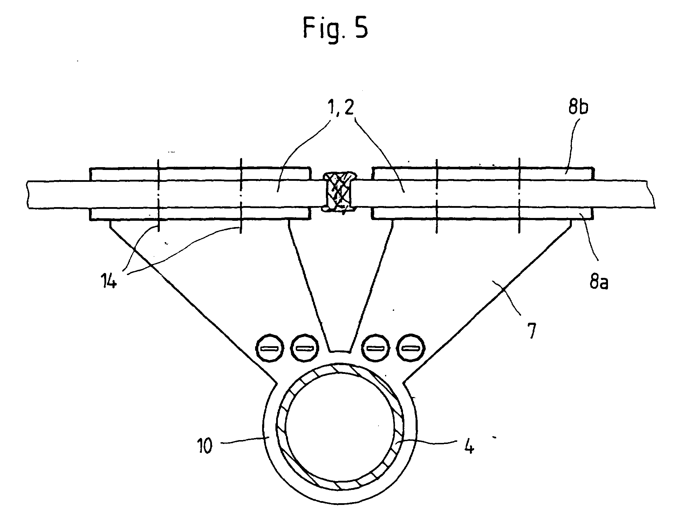

In den Figuren 4 und 5 ist eine gegenüber den Figuren 2 und 3 geringfügig abgewandelte Variante dargestellt. Hierbei fehlt das an der Stütze 4 angeordnete Halteelement für die Verbindungsarme 7. Stattdessen sind die einzelnen Verbindungsarme 7 an einem die Stütze 4 umschließenden Ring 10 oder einer entsprechenden Hülse befestigt. Zwischen der Stütze 4 und dem umgebenden Ring 10 besteht ein Spiel, welches ausreichen ist, damit der Ring 10 bzw. die Hülse axial auf der Stütze 4 gleiten kann. Um dies allerdings im Normalfall zu verhindern, sind Ring 10 und Stütze 4 durch ein stiftförmiges Blockierelement 11 formschlüssig miteinander verbunden. Das Blockierelement 11 stellt im Normalfall sicher, daß der als Halterung für die Brandschutzscheiben 1,2 dienende Ring 10 starr mit der Stütze 4 verbunden ist. Im Brandfall dehnt sich die Stütze 4 infolge der einwirkenden Hitze stark aus, während die Brandschutzscheiben 1,2 keine nennenswerte Ausdehnung aufweisen. Infolgedessen treten starke thermische Lageänderungen zwischen der Stütze 4 einerseits und den Brandschutzscheiben 1,2 andererseits auf, wodurch auf das Blockierelement 11 eine starke Scherkraft ausgeübt wird. Das Blockierelement 11 wirkt in diesem Fall als Sollbruchelement, welches der auftretenden Krafteinwirkung durch seitliches Abscheren nachgibt. Anschließend ist ein ungehindertes Ausdehnen der Stütze 4 möglich, ohne daß Kräfte auf die Brandschutzscheiben 1,2 ausgeübt werden. Insbesondere kann es wegen der ungleichen Ausdehnung von Stütze 4 einerseits und Brandschutzscheiben 1,2 andererseits zu keiner seitlichen Wölbung der Brandschutzverglasung kommen.

Um der unten und oben an Boden 5 bzw. Decke 6 befestigten Stütze 4 ein Ausdehnen zu ermöglichen, wird die Stütze 4 deckenseitig von einem in die Stütze 4 eintauchenden Zapfen 12 zentriert, wobei der Zapfen 12 nur so weit in die Stütze 4 eintaucht, daß noch ein hinreichendes Spiel 13 für den thermischen Längenausgleich verbleibt.

Abweichend von der vorgenannten Wirkungsweise des Blockierelementes 11 als Sollbruchelement kann dieses auch als Schmelzelement ausgebildet sein. Ein solches, vorzugsweise aus Aluminium oder Kunststoff bestehendes Schmelzelement verliert im Brandfall sehr schnell seine Blockierfunktion, so daß anschließend ein freier Längenausgleich zwischen Stütze 4 und Brandschutzverglasung möglich ist.

### Bezugszeichenliste

- 1: Brandschutzscheibe, feststehend
- 2: Brandschutzscheibe, beweglich
- 3: Scharnier
- 4: Stütze
- 5: Boden des Raumes
- 6: Decke des Raumes
- 7: Verbindungsarm
- 8a: Stützplatte
- 8b: Stützplatte
- 9: Halteelement
- 10: Ring
- 11: Blockierelement
- 12: Zapfen
- 13: Spiel
- 14: Verschraubung

## Patentansprüche

1. Brandschutzverglasung zur Vermeidung des Durchtritts von Feuer und Rauch im Brandfall aus einem Raum in einen anderen unter Verwendung von Brandschutzscheiben mit einem darin enthaltenen, im Brandfall unter Kühlwirkung aufschäumenden und hierbei teilweise aus den Stirnflächen der Brandschutzscheiben austretenden Schutzwirkstoff, sowie mit einer die Brandschutzscheibe seitlich haltenden Stützkonstruktion, die selbst keine Schutzmaßnahmen gegen Feuer und Hitze aufweist,
**dadurch gekennzeichnet,**
daß sich die Stützkonstruktion aus mindestens einer vorzugsweise vertikal angeordneten Stütze (4) zusammensetzt, die mit Abstand zu den Brandschutzscheiben (1,2) freistehend im Raum angeordnet und hierbei mit ihren beiden Enden an den jeweiligen raumbegrenzenden Flächen (5,6) befestigt ist, und die ausschließlich über Verbindungsarme (7) mit den jeweils benachbarten Brandschutzscheiben (1,2) verbunden ist und diese hält.

2. Brandschutzverglasung nach Anspruch 1, dadurch gekennzeichnet, daß Mittel (10) vorgesehen sind, um thermisch bedingte Lageänderungen zwischen der Stütze (4) einerseits und den Brandschutzscheiben (1,2) andererseits auszugleichen.

3. Brandschutzverglasung nach Anspruch 2, dadurch gekennzeichnet, daß die Ausgleichsmittel in einer axialen Verschiebbarkeit der Verbindungsarme (7) entlang der Stütze (4) bestehen.

4. Brandschutzverglasung nach Anspruch 2 oder Anspruch 3, gekennzeichnet durch ein Blockierelement (11), welches die Ausgleichsmittel (10) erst bei Hitzeeinwirkung freigibt.

5. Brandschutzverglasung nach Anspruch 4, gekennzeichnet durch ein Schmelzelement als Blockierelement (11) oder zur Freigabe des Blockierelementes (11).

6. Brandschutzverglasung nach Anspruch 4, gekennzeichnet durch ein Sollbruchelement als Blockierelement (11) oder zur Freigabe des Blockierelements (11).

7. Brandschutzverglasung nach einem der Ansprüche 1 bis 6, dadurch gekennzeichnet, daß die Stütze (4) mit einem Längenausgleich (12) versehen ist, vorzugsweise im Bereich ihrer oberen Befestigung.

8. Brandschutzverglasung nach einem der Ansprüche 1 bis 7, dadurch gekennzeichnet, daß sich die Stütze (4) ausschließlich auf der einen Seite der Brandschutzverglasung befindet, wohingegen die andere Seite der Brandschutzverglasung frei von Stützkonstruktionen ist.

9. Brandschutzverglasung nach einem der Ansprüche 1 bis 8, dadurch gekennzeichnet, daß an den Verbindungsarmen (7) Stützplatten (8a) befestigt sind, an denen die Brandschutzscheiben (1,2) in ihren Randbereichen flächig anliegen.

10. Brandschutzverglasung nach Anspruch 9, dadurch gekennzeichnet, daß die Randbereiche der Brandschutzscheiben (1,2) zwischen paarweise miteinander verbundenen Stützplatten (8a,8b) eingespannt sind.

## Claims

1. Fire-resistant glazing to avoid the passage of fire and smoke in the event of a fire from one room to another using fire-resistant panes of glass, having a protective substance contained therein which foams in the event of a fire, with a cooling effect, and, in the process, partially emerges from the end faces of the fire-resistant panes of glass, and having a support structure which holds the fire-resistant pane of glass at the side and does not itself have any protective measures against fire and heat, characterized in that the support structure is composed of at least one preferably vertically arranged support (4) which is arranged in a free-standing manner in the room at a distance from the fire-resistant panes of glass (1, 2) and, in this position, is attached by its two ends to the respective surfaces (5, 6) bounding the room and which is connected solely by means of connecting arms (7) to the respective adjacent fire-resistant panes of glass (1, 2), holding the latter.

2. Fire-resistant glazing according to Claim 1, characterized in that means (10) are provided to compensate thermally caused changes in position between the support (4) on the one hand and the fire-resistant panes of glass (1, 2) on the other hand.

3. Fire-resistant glazing according to Claim 2, characterized in that the compensating means consist of axial displaceability of the connecting arms (7) along the support (4).

4. Fire-resistant glazing according to Claim 2 or Claim 3, characterized by a blocking element (11), which only releases the compensating means (10) under the effect of heat.

5. Fire-resistant glazing according to Claim 4, characterized by a melting element as blocking element (11) or to release the blocking element (11).

6. Fire-resistant glazing according to Claim 4, characterized by an intended rupture element as blocking element (11) or to release the blocking element (11).

7. Fire-resistant glazing according to one of Claims 1 to 6, characterized in that the support (4) is provided with length compensation (12), preferably in the region of its upper attachment.

8. Fire-resistant glazing according to one of Claims 1 to 7, characterized in that the support (4) is located solely on one side of the fire-resistant glazing, whereas the other side of the fire-resistant glazing is free from support structures.

9. Fire-resistant glazing according to one of Claims 1 to 8, characterized in that support plates (8a) are attached to the connecting arms (7), against which support plates the fire-resistant panes of glass (1, 2) rest flat in their edge regions.

10. Fire-resistant glazing according to Claim 9, characterized in that the edge regions of the fire-resistant panes of glass (1, 2) are clamped between support plates (8a, 8b) connected to one another in pairs.

## Revendications

1. Vitrage pare-feu pour éviter en cas d'incendie la propagation du feu et de la fumée d'une pièce à une autre en utilisant des vitres pare-feu avec une matière active protectrice, contenue dans les vitres, moussant en cas d'incendie avec une action refroidissante et s'échappant alors partiellement des bords des vitres pare-feu, ainsi qu'avec une construction de support qui tient latéralement les vitres pare-feu et qui ne comporte pas elle-même de mesures de protection contre le feu et la chaleur,
caractérisé en ce que
la construction de support se compose d'au moins un montant (4) qui est agencé de préférence verticalement, qui est isolé dans la pièce à une certaine distance des vitres pare-feu (1, 2), qui est fixé par ses deux extrémités aux surfaces (5, 6) limitant la pièce et qui n'est fixé aux vitres pare-feu (1, 2) respectivement voisines, en les tenant, que par des bras de liaison (7).

2. Vitrage pare-feu selon la revendication 1, caractérisé en ce que des moyens (10) sont prévus pour compenser des variations de position, dues à la température, entre le montant (4) d'une part et les vitres pare-feu (1, 2) d'autre part.

3. Vitrage pare-feu selon la revendication 2, caractérisé en ce que les moyens de compensation consistent en une mobilité axiale des bras de liaison (7) le long du montant (4).

4. Vitrage pare-feu selon la revendication 2 ou la revendication 3, caractérisé par un élément bloquant (11) qui libère les moyens de compensation (10) seulement sous l'action de la chaleur.

5. Vitrage pare-feu selon la revendication 4, caractérisé par un élément destiné à fondre comme élément bloquant (11) ou pour libérer l'élément bloquant (11).

6. Vitrage pare-feu selon la revendication 4, caractérisé par un élément destiné à la rupture comme élément bloquant (11) ou pour libérer l'élément bloquant (11).

7. Vitrage pare-feu selon l'une des revendications 1 à 6, caractérisé en ce que le montant (4) est muni d'une compensation en longueur (12), de préférence dans la zone de sa fixation supérieure.

8. Vitrage pare-feu selon l'une des revendications 1 à 7, caractérisé en ce que le montant (4) se trouve exclusivement d'un seul côté du vitrage pare-feu tandis que l'autre côté du vitrage pare-feu ne comporte aucune construction de support.

9. Vitrage pare-feu selon l'une des revendications 1 à 8, caractérisé en ce que des plaques d'appui (8a), contre lesquelles se trouvent, surface contre surface, les vitres pare-feu (1, 2) dans leurs zones de bordures, sont fixées aux bras de liaison (7).

10. Vitrage pare-feu selon la revendication 9, caractérisé en ce que les zones de bordures des vitres pare-feu (1, 2) sont encastrées entre des plaques d'appui (8a, 8b) liées ensemble deux à deux.
